# EUROPEAN PATENT SPECIFICATION

(11) **EP 1 672 887 B1**
(45) Date of publication and mention of the grant of the patent: **09.01.2013**
(21) Application number: 05111475.9
(22) Date of filing: 29.11.2005
(51) Int. Cl.: G06F 3/023, H04M 1/2745

(54) **Method and device for retrieving address book information upon user input of a number or a letter in a keypad**
Verfahren und Vorrichtung zur Bereitstellung von Adressbuchinformationen basiert auf der Tastatureingabe einer Zahl oder eines Buchstaben
Procédé et dispositif pour extraire des informations relatives à un répertoire d'adresses basé sur l'introduction par clavier d'un numéro ou d'une lettre

(30) Priority: 14.12.2004 CN 200410102109
(43) Date of publication of application: 21.06.2006
(73) Proprietor: HTC Corporation, Taoyuan County 330 (TW)
(72) Inventor: Wang, John C., Taoyuan, (CN)
(74) Representative: 2K Patentanwälte Blasberg Kewitz & Reichel

(56) References cited:
- EP-A- 1 193 956
- WO-A-2004/049150
- US-B1- 6 504 925

## Description

### BACKGROUND

The present disclosure relates to dialing methods, and more particularly, to dialing methods that enable dialing by name and dialing by number, and related devices.

Portable devices, such as mobile phones, PDA phones, and smart phones are convenient. More and more users carry and use the portable devices for related applications. Generally, a user can input phone numbers for dialing via a keypad. Additionally, the portable device often provides an address book function for address recording and management. A user can also input specific personal data, and retrieve corresponding address records from the address book for dialing accordingly. Further, the portable device provides an option to dial by name or dial by number. In dialing by name, the portable device can retrieve and display address records conforming to part or all of a complete name input by a user, and use the retrieved address record for dialing. In dialing by number, the portable device can retrieve and display address records conforming to part or all of a complete number input by a user, and use the retrieved address record for dialing.

The portable device is limited in size, and provides respective keys with multiple input definitions. For example, on a typical mobile phone containing a QWERTY keypad, the keypad can be used to enter letters or numbers by switching between a letter mode and a number mode. While a user has the option to either dial by name or dial by number, or requires inputting letters or numbers for retrieving address records from the address book, letter/number mode switching is an inconvenient and extra step. For example, when dialing by name, a user has to first switch the keypad to letter mode, or open the address book, which requires switching to the letter mode. After switching to the letter mode, the user is allowed to input data and dial by name.

A typical user does not desire to be forced to purposefully think ahead of time and perform the switch procedure. For example, a user may want to just dial by name when thinking about a name or dial by number when thinking about a number. The switch between the letter and number modes violates the nature of thinking and behavior model of a person, and the time and difficulty for dialing operation is therefore increased. From the patent US 6 504 925 there is known a dialing method used in a device comprising a keyboard having a part with non-numerical-purpose keys (QWERTY keypad) and a part with numerical-purpose keys (number keypad). Thus there is a fixed one-to-one relationship between each key and its purpose or function. The inputs from the QWERTY keypad are always letter mode inputs and the inputs from number keypad are always numerical inputs. This two-part keyboard needs some space and cannot be used for small-sized telephone devices.

From WO 2004/049150 A2 there is known a portable device with a keypad with dual-purpose keys, which can be a PDA (Personal Digital Assistant) or wireless phone having a keyboard and control elements, such as a knob/wheel and set of control buttons. The problem which is solved there is the exposing of the control elements in dependence from the actual keypad position.

From EP 1 193 956 A2 there is known a portable device being designed as mobile phone, comprising a number keypad and a qwerty keypad.
US2004165924 discloses a physical keyboard including a plurality of multi-functional keys with a reduced column QWERTY key arrangement overlaid with a numeric phone key arrangement for use in both text entry and telephony. Another physical keyboard includes a plurality of multi-functional keys having an array of alphabetic characters and an overlaid numeric array of numbers. A handheld mobile station has a first user interface having a standard alphabetic key arrangement and a second user interface having a numeric phone key arrangement.

### SUMMARY

This invention is directed to the method of claim 1, the device of claim 8 and the storage medium of claim 15. Advantageous embodiments are claimed in the subclaims.

Dialing methods and related devices are provided. In an exemplary embodiment of a dialing method for use in a device comprising a keypad, at least one keystrokes are received, and an input sequence corresponding to the keystrokes is generated. The keypad comprises a plurality of dual-purpose keys and non-numerical-purpose keys. The dual-purpose key has different input definitions in a letter mode and a number mode, and the non-numerical-purpose key does not have a numerical input definition. If any one of the keystrokes corresponds to one of the non-numerical-purpose keys, at least one address record conforming to a letter input definition of the input sequence in the letter mode is retrieved from an address book for dialing accordingly.

If all of the keystrokes correspond to the dual-purpose keys, at least one address record conforming to a letter input definition of the input sequence in the letter mode or a numerical input definition of the input sequence in the number mode is retrieved from the address book for dialing accordingly.

It is determined whether the address record conforms to the letter input definition by checking whether the letter input definition exists in the beginning or any position of at least one letter data field of the address record. It is determined whether the address record conforms to the numerical input definition by checking whether the numerical input definition exists in the beginning of at least one number data field of the address record.

The numerical input definition of the input sequence in the number mode can be used for dialing directly.

An exemplary embodiment of a device comprises a keypad, an address book and a processing unit. The keypad comprises a plurality of dual-purpose keys and non-numerical-purpose keys. The dual-purpose key has different input definitions in a letter mode and a number mode, and the non-numerical-purpose key does not have a numerical input definition. The address book comprises a plurality of address records. The processing unit receives at least one keystrokes, and generates an input sequence corresponding thereto. If any keystroke corresponds to one of the non-numerical-purpose keys, at least one address record conforming to a letter input definition of the input sequence in the letter mode is retrieved from the address book for dialing accordingly.

If all of the keystrokes correspond to the dual-purpose keys, the processing unit further retrieves at least one address record conforming to a letter input definition of the input sequence in the letter mode or a numerical input definition of the input sequence in the number mode from the address book for dialing accordingly.

The processing unit determines whether the address record conforms to the letter input definition by checking whether the letter input definition exists in the beginning or any position of at least one letter data field of the address record. The processing unit determines whether the address record conforms to the numerical input definition by checking whether the numerical input definition exists in the beginning of at least one number data field of the address record.

The processing unit further provides the use of the numerical input definition of the input sequence in the number mode for dialing directly.

Dialing methods may take the form of program code embodied in a tangible media. When the program code is loaded into and executed by a machine, the machine becomes an apparatus for practicing the disclosed method

### DESCRIPTION OF THE DRAWINGS

The invention will become more fully understood by referring to the following detailed description with reference to the accompanying drawings, wherein:
Fig. 1 is a schematic diagram illustrating an embodiment of a device performing a dialing method;
Fig. 2 shows an example of a keypad;
Fig. 3 shows an example of an address book;
Fig. 4 is a flowchart of an embodiment of a dialing method;
Figs. 5A to 5F show a dialing example;
Figs. 6A to 6E show a dialing example;
Figs. 7A and 7B show a dialing example; and
Fig. 8 is a schematic diagram illustrating an embodiment of a storage medium storing a computer program for execution of a dialing method.

### DESCRIPTION

Dialing methods and related devices are provided.

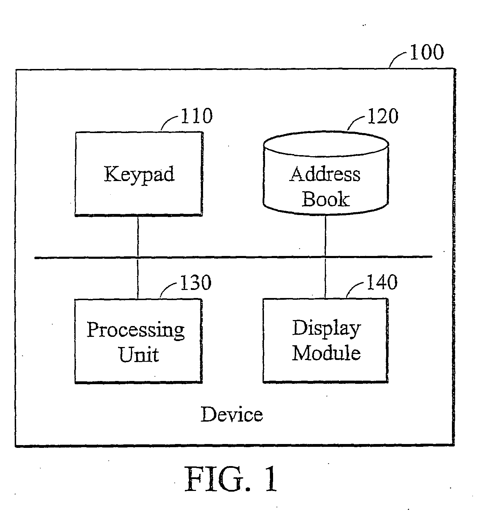

Fig. 1 is a schematic diagram illustrating an embodiment of a device performing a dialing method.

The device 100 may be a processor-based device, such as computer system, or a portable device, such as mobile phone, PDA phone, and smart phone. The device 100 comprises a keypad 110, an address book 120, a processing unit 130, and a display module 140.

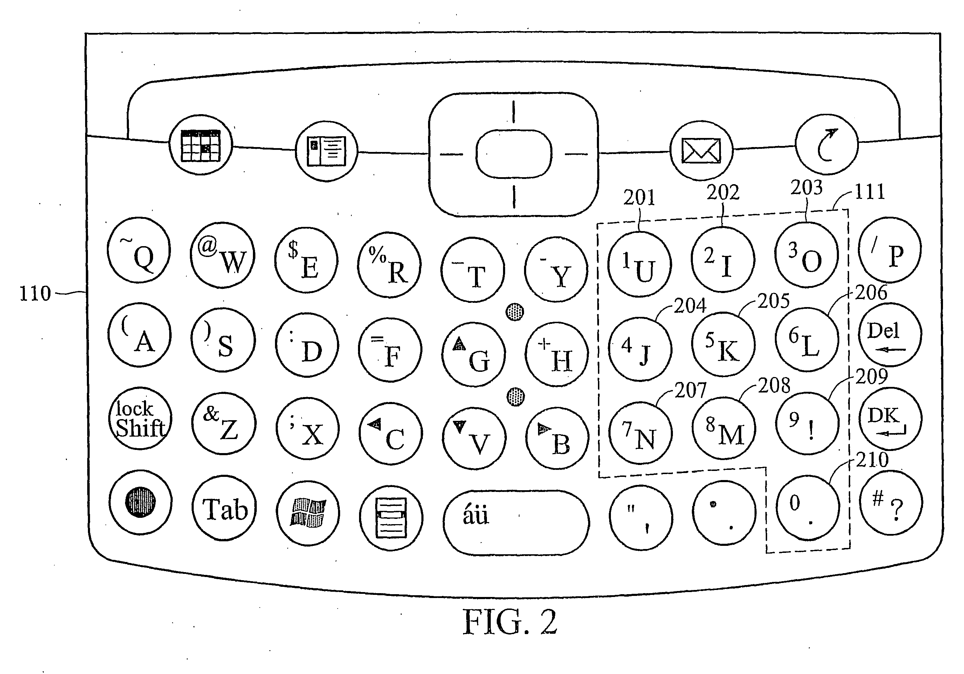

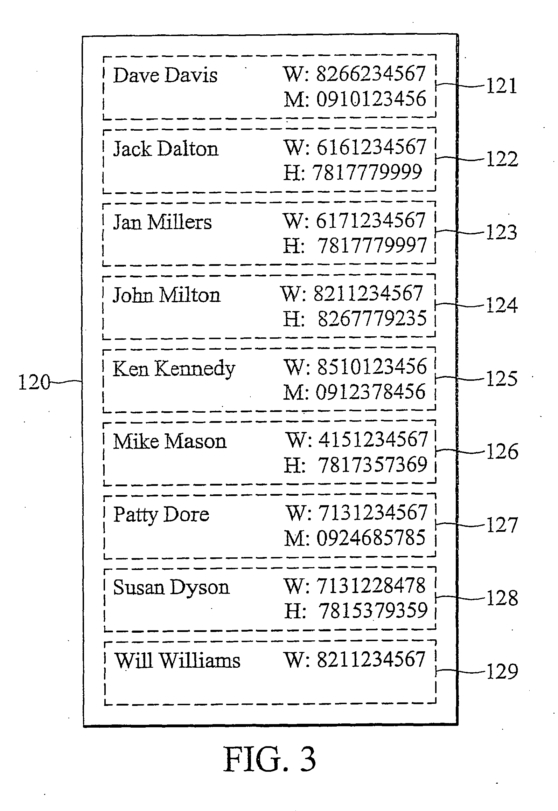

The keypad 110 comprises a plurality of dual-purpose keys and non-numerical-purpose keys. The dual-purpose key has different input definitions in a letter mode and a number mode, and the non-numerical-purpose key does not have a numerical input definition. Fig. 2 shows an example of a keypad, but the disclosure is not limited thereto. In this example, the keypad 110 includes several dual-purpose keys 201-210 in the block 111, and non-numerical-purpose keys outside of the block 111. For example, the input definitions of the dual-purpose key 201 in the letter mode and number mode can be "U" and "1", respectively. It is understood that, in the embodiments, the non-numerical-purpose keys are keys without input definitions in the number mode. The non-numerical-purpose keys, however, may have different input definitions in other modes. For example, the non-numerical-purpose key may have upper- and lower-case letter input definitions. The address book 120 has a plurality of address records comprising several data fields in various formats. For example, a letter data field stores first and second names of a person, a number data field stores the office, home, and mobile phone numbers of the person, and others. Fig. 3 shows an example of an address book. In this example, the address book 120 includes 9 address records 121~129. The processing unit 130 provides calculating power for device 100, and performs the dialing method. The display module 140 displays related information based on instructions from the processing unit 130.

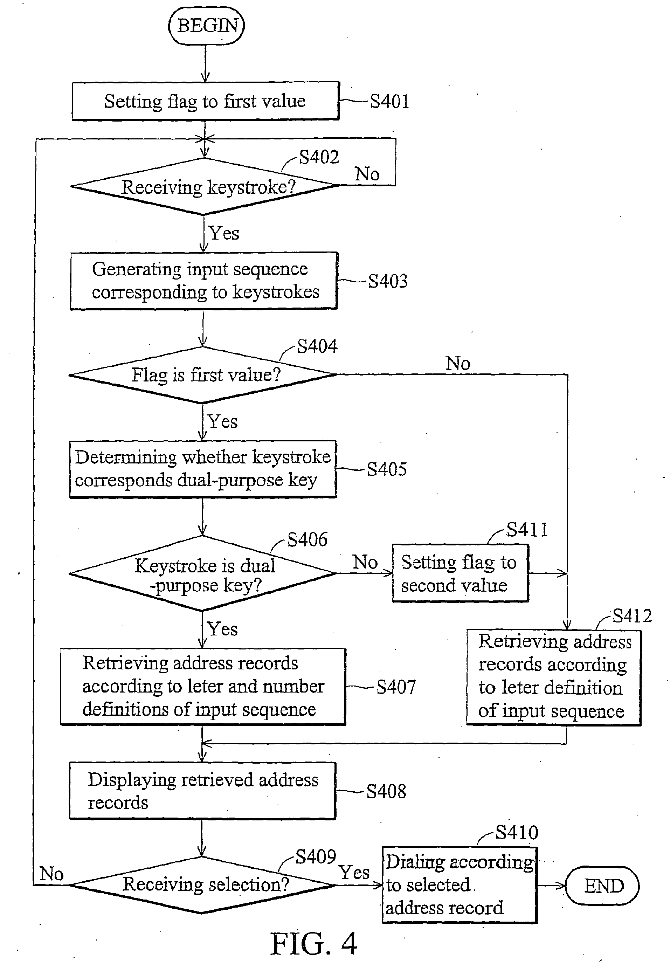

Fig. 4 is a flowchart of an embodiment of a dialing method. The dialing method is used for a device comprising a keypad. The keypad comprises a plurality of dual-purpose keys and non-numerical-purpose keys. The dual-purpose key has different input definitions in a letter mode and a number mode, and the non-numerical-purpose key does not have a numerical input definition.

In step S401, the processing unit 130 sets a flag to a first value, such as false. The flag determines whether the device accepts input definitions in both letter and number modes, or only in letter mode. If the flag is the first value, the device accepts input definitions in both letter and number modes. If the flag is a second value, such as true, the device accepts input definitions in letter mode.

In step S402, the processing unit 130 determines whether a keystroke is received. If not, the procedure remains at step S402. If so, in step S403, the processing unit 130 generates an input sequence corresponding to the keystroke. It is understood that the respective keystrokes are combined to generate and store an input sequence according to the corresponding input order before an input procedure completes. In step S404, the processing unit 130 determines whether the flag is the first value. If not, the procedure goes to step S412. If so, in step S405, it is determined whether the keystroke is one of the dual-purpose keys. If so (Yes in step S406), in step S407, the processing unit 130 retrieves address records conforming to a letter input definition of the input sequence in the letter mode and a numerical input definition of the input sequence in the number mode from the address book 120, and in step S408, displays the retrieved address records via the display module 140. If the keystroke is not a dual-purpose key, that is the keystroke corresponds to one of the non-numerical-purpose keys (No in step S406), in step S411, the processing unit 130 sets the flag to the second value, and in step S412 retrieves address records conforming to a letter input definition of the input sequence in the letter mode from the address book 120, and in step S408, displays the retrieved address records via the display module 140.

It is understood that the processing unit 130 determines whether an address record conforms to the letter input definition by checking whether the letter input definition exists in the beginning or any position of at least one letter data field of the address record. The processing unit 130 determines whether an address record conforms to the numerical input definition by checking whether the numerical input definition exists in the beginning of at least one number data field of the address record. Additionally, the processing unit 130 also displays the numerical input definition of the input sequence in the number mode via the display module 140. The user can select an address record displayed in the display module 140 via the keypad 110 for dialing, accordingly. Further, the user can directly press a confirmation key or a dialing key to dial according to the numerical input definition of the input sequence in the number mode. If no selection is received by the processing unit 130 (No in step S409), the procedure returns to step S402 to await another keystroke. If a selection is received by the processing unit 130 (Yes in step S409), in step S410, a call is placed according to the phone number of the selected address record.

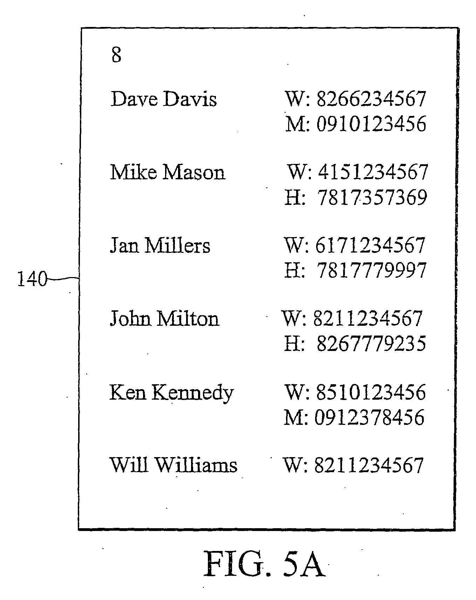

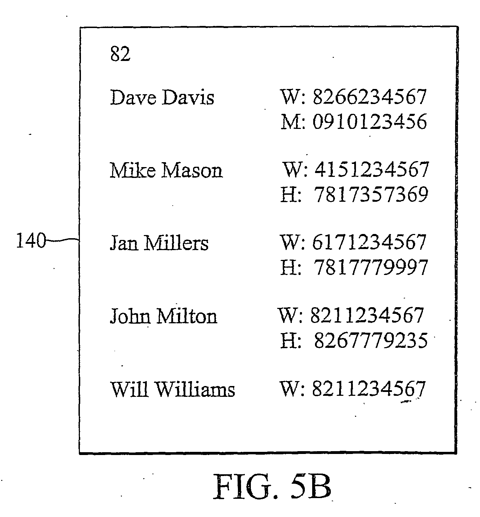

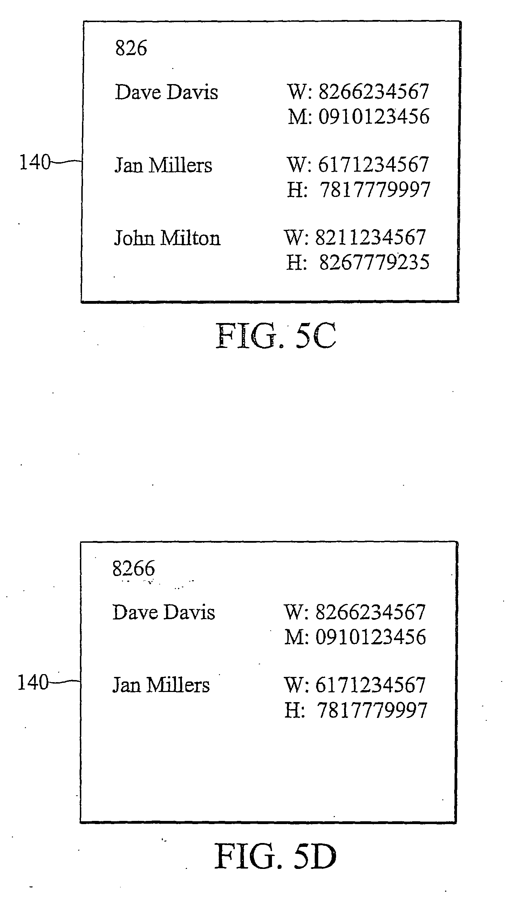

In Figs. 2, 3 and 5A-5F, a dialing example is shown. When key [8/M] 208 is pressed, the display module 140 displays the numerical input definition "8" of [8/M] 208 in the number mode, and the address records retrieved from the address book 120 as shown in Fig. 5A. Since key [8/M] 208 is a dual-purpose key, the retrieved address records conform to the letter input definition "M" of [8/M] 208 in the letter mode and the numerical input definition "8" of [8/M] 208 in the number mode. It is noted that, in this example, the matched letter or numerical input definition is from the beginning of the data field. The user inputs keys [2/I] 202, [6/L] 206, and [6/L] 206 in order, as respectively shown in Figs. 5B~5D.

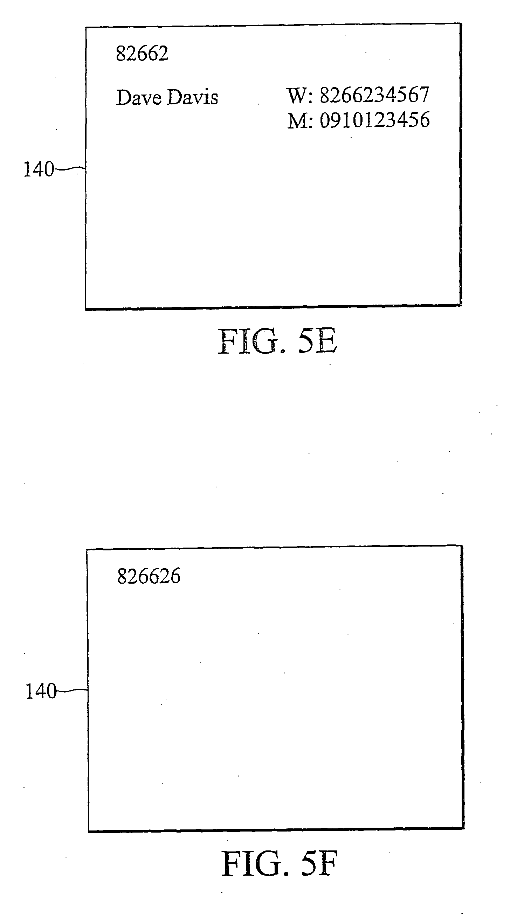

The user presses key [2/I] 202. As shown in Fig. 5E, the address book 120 includes only an address record conforming to the numerical input definition, and no address record conforming to the letter input definition. Since, at this time, the user may be searching the address book by number, or dialing an entirely new number. It is understood that the user can select any of the retrieved address records for dialing in the procedure from Figs. 5A to 5E. When key [6/L] 206 is further pressed, and no matched address record is in the address book 120, as shown in Fig. 5F, the user wants to dial with an entirely new number. After the complete number is input, the user can press confirmation key or dialing key for dialing.

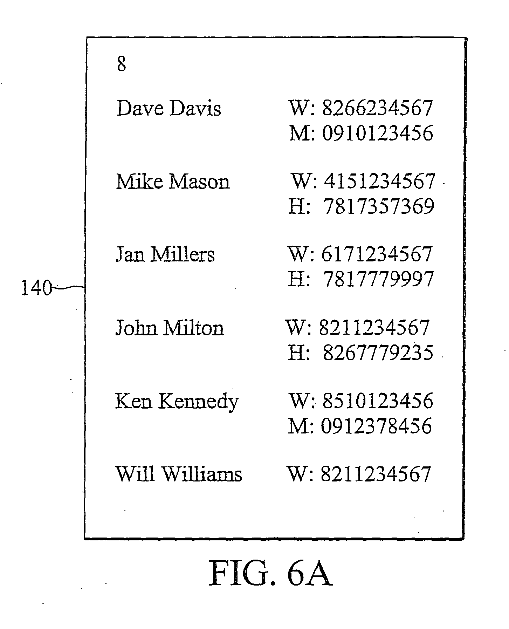

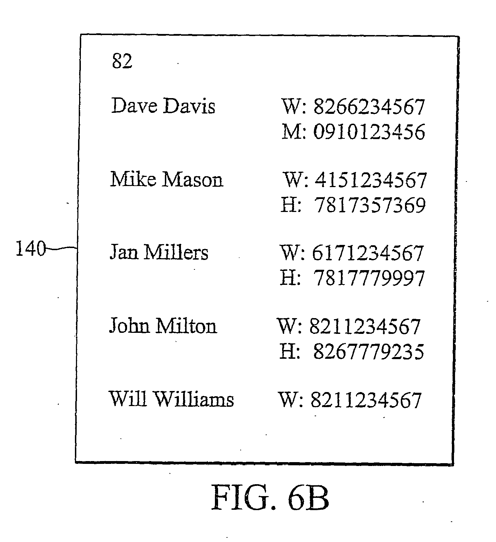

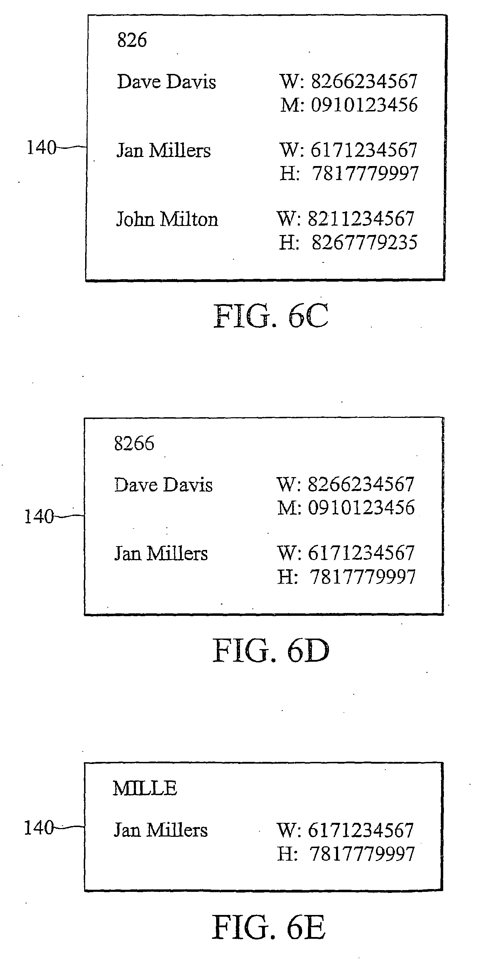

In Figs. 2, 3 and 6A-6E, a dialing example is shown. The user inputs keys [8/M] 208, [2/I] 202, [6/L] 206, and [6/L] 206 in order, as respectively shown in Figs. 6A~6D. If the user continues to input key [E] of the keypad 110, since key [E] is a non-numerical-purpose key, the processing unit 130 enables the device 100 to accept only the input definition in the letter mode. At this time, the retrieved address record conforms to the letter input definition "MILLE" of [8/M] 208, [2/1] 202, [6/L] 206, [6/L] 206, and [E], as shown in Fig. 6E.

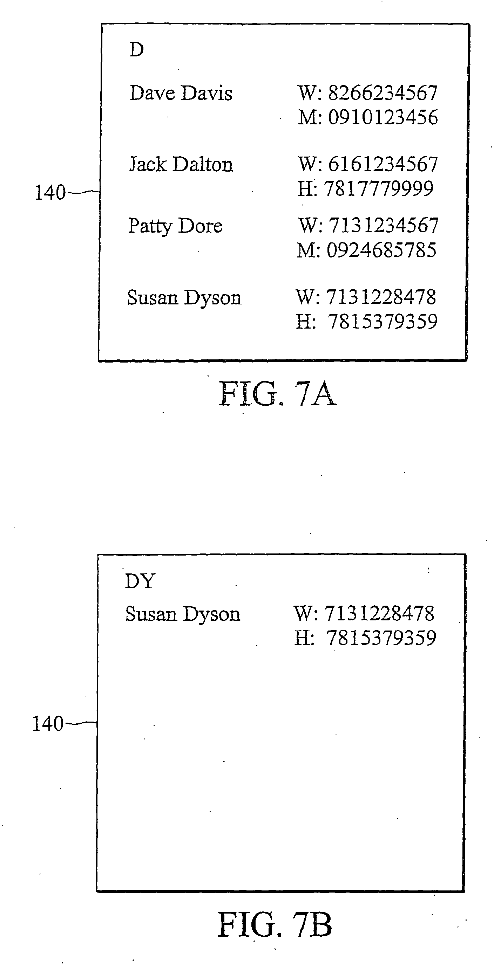

In Figs. 2, 3, 7A, and 7B, a dialing example is shown. Key [D] of the keypad 110 is pressed. Since key [D] is a non-numerical-purpose key, the processing unit 130 enables the device 100 to accept only the input definition in the letter mode, and retrieve address records according to the letter input definition "D" of key [D] in the letter mode, as shown in Fig. 7A. Key [Y] of the keypad 110 is further pressed. The processing unit 130 then retrieves address records according to the letter input definition "DY" of keys [D] and [Y] in the letter mode, as shown in Fig. 7B.

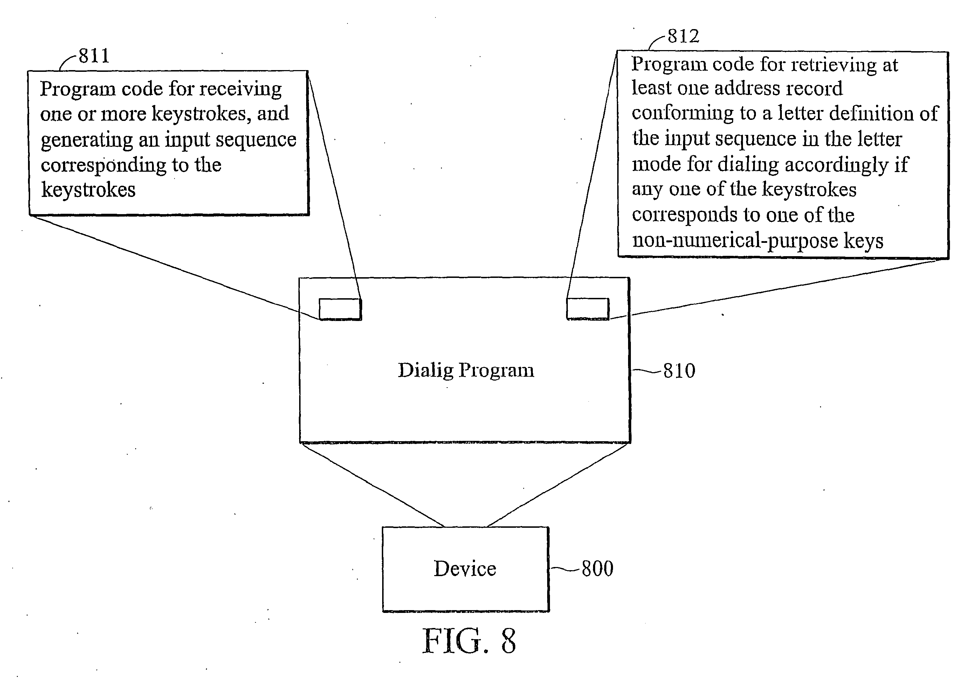

Fig. 8 is a schematic diagram illustrating an embodiment of a storage medium storing a computer program for execution of a dialing method. The computer program product comprises a storage medium 810 storing computer readable program code for use in a device 800, such as computer system and mobile device. The device 800 comprises a keypad comprising a plurality of dual-purpose keys and non-numerical-purpose keys. The dual-purpose key has different input definitions in a letter mode and a number mode, and the non-numerical-purpose key does not have a numerical input definition. The computer readable program code comprises at least computer readable program code 811 receiving at least one keystrokes, and generating an input sequence corresponding to the keystrokes, and computer readable program code 812 retrieving at least one address record conforming to a letter input definition of the input sequence in the letter mode for dialing accordingly if any of the keystrokes corresponds to one of the non-numerical-purpose keys.

Dialing methods, or certain aspects or portions thereof, may take the form of program code (i.e., executable instructions) embodied in tangible media, such as products, floppy diskettes, CD-ROMS, hard drives, or any other machine-readable storage medium, wherein, when the program code is loaded into and executed by a machine, such as a computer or a device comprising a mobile phone, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine, such as a computer or a device comprising a mobile phone, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope of this invention. Therefore, the scope of the present invention shall be defined and protected by the following claims.

## Claims

1. A dialing method used in a device comprising a keypad (110), the keypad (110) comprising a plurality of dual-purpose keys and non-numerical-purpose keys, the dual-purpose keys having different input definitions in a letter mode and a number mode, and the non-numerical-purpose keys without numerical input definition, the method comprising:
receiving keystrokes comprising at least a first keystroke and a second keystroke, and generating an input sequence corresponding thereto; and
the method is **characterized by** if the first keystroke or the second keystroke corresponds to one of the non-numerical-purpose keys, accepting only the input definition in the letter mode, and generating a letter input definition of the input sequence in the letter mode, and only retrieving at least one address record conforming to the letter input definition of the input sequence in the letter mode from an address book (120) for dialing accordingly.

2. The method of claim 1 further comprising if the keystrokes correspond to the dual-purpose keys, retrieving at least one address record conforming to the letter input definition and a numerical input definition of the input sequence in the letter and number modes from the address book for dialing accordingly.

3. The method of claim 2 further comprising dialing using the numerical input definition of the input sequence in the number mode.

4. The method of claim 1 further comprising determining whether the address record conforms to the letter input definition by checking whether the letter input definition exists in the beginning or any position of at least one letter data field of the address record.

5. The method of claim 2 further comprising determining whether the address record conforms to the numerical input definition by checking whether the numerical input definition exists in the beginning of at least one number data field of the address record.

6. The method of claim 1 further comprising receiving a selection of the retrieved address record, and dialing according to at least one phone number corresponding to the selected address record.

7. The method of claim 1 further comprising displaying the retrieved address record.

8. A device, comprising a keypad (110) comprising a plurality of dual-purpose keys and non-numerical-purpose keys, the dual-purpose keys having different input definitions in a letter mode and a number mode, and the non-numerical-purpose keys without numerical input definition, and an address book (120) comprising a plurality of address records, and the device is **characterized in**:
a processing unit (130) for receiving keystrokes comprising at least a first keystroke and a second keystroke, if the first keystroke or the second keystroke corresponds to one of the non-numerical-purpose keys, for accepting only the input definition in the letter mode, and generating a letter input definition of the input sequence in the letter mode, and for only retrieving at least one address record conforming to the letter input definition of the input sequence in the letter mode from the address book for dialing accordingly.

9. The device of claim 8 wherein the processing unit (130) is further adapted to retrieve at least one address record conforming to the letter input definition and a numerical input definition of the input sequence in the letter and number modes from the address book for dialing accordingly if the keystrokes correspond to the dual-purpose keys.

10. The device of claim 9 wherein the processing unit (130) is further adapted to dial_using the numerical input definition of the input sequence in the number mode.

11. The device of claim 8 wherein the processing unit (130) is further adapted to determine whether the address record conforms to the letter input definition by checking whether the letter input definition exists in the beginning or any position of at least one letter data field of the address record.

12. The device of claim 9 wherein the processing unit (130) is further adapted to determine whether the address record conforms to the numerical input definition by checking whether the numerical input definition exists in the beginning of at least one number data field of the address record.

13. The device of claim 8 wherein the processing unit (130) is further adapted to receive a selection of the retrieved address record, and to dial according to at least one phone number corresponding to the selected address record.

14. The device of claim 8 further comprising a display module (140) for displaying the retrieved address record.

15. A machine-readable storage medium comprising a computer program, which, when executed, causes a device to perform all the steps of the methods claimed in any one of claims 1-7.

## Patentansprüche

1. Ein Wählverfahren, das in einer Vorrichtung benutzt wird, umfassend eine Tastatur (110), die Tastatur (110) umfassend eine Vielzahl von Mehrzweck- Tasten und Tasten für nicht- numerische Zwecke, die Mehrzweck- Tasten haben unterschiedliche Eingabedefinitionen in einem Buchstaben-Modus und einem Zahlen- Modus, und die Taste für nichtnumerische Zwecke ohne universelle numerische EingabeDefinitionen, wobei das Verfahren umfasst:
Empfangen von Tastenanschlägen, umfassend zumindest einen ersten Tastenanschlag und einen zweiten Tastenanschlag, und Erzeugung einer dazu entsprechenden Eingabesequenz, und
das Verfahren ist **dadurch gekennzeichnet dass**, wenn der erste oder der zweite Tastenanschlag einer der Tasten für nicht- numerische Zwecke entspricht, nur der Eingabe-Definition im Buchstaben- Modus akzeptiert wird, und eine Buchstaben- Eingabe- Definition der Eingangssequenz im Buchstaben- Modus erzeugt wird, und dass nur das Abrufen mindestens eines Adresseintrages gemäß der Buchstaben-Eingabe- Definition der Eingabesequenz in dem Buchstaben-Modus aus einem Adressbuch (120) für die entsprechende Anwahl erfolgt.

2. Verfahren nach Anspruch 1, ferner umfassend, wenn die Tastenanschläge den Mehrzweck- Tasten entsprechen, Abrufen wenigstens eines Adresseintrages entsprechend dem Datensatz der Buchstaben- Eingabe- Definition und der numerische Eingabe- Definition der Eingangssequenz in den Buchstaben- und Zahlen- Modi aus dem Adressbuch, um entsprechend zu wählen.

3. Verfahren nach Anspruch 2, weiterhin umfassend das Wählen unter Verwendung der numerischen Eingabe- Definition der Eingabesequenz in dem Nummern- Modus.

4. Verfahren nach Anspruch 1, ferner umfassend das Bestimmen, ob der Adresseintrag der Buchstaben- Eingabe-Definition entspricht, durch Prüfen, ob die Buchstaben-Eingabe- Definition am Anfang existiert, oder an irgendeiner Position an mindestens einem Buchstaben Datenfeld des Adresseintrages.

5. Verfahren nach Anspruch 2, ferner umfassend das Bestimmen, ob der Adresseintrag der numerischen Eingabe-Definition entspricht, indem geprüft wird, ob die numerische Eingabe- Definition am Anfang mindestens eines numerischen Datenfeldes des Adresseintrages existiert.

6. Verfahren nach Anspruch 1, ferner umfassend das Empfangen einer Auswahl der abgerufenen Adresseinträge, und Wählen wenigstens einer Telefonnummer entsprechend des ausgewählten Adresseintrages.

7. Verfahren nach Anspruch 1, ferner umfassend das Anzeigen der abgerufenen Adresseinträge.

8. vorrichtung, umfassend ein Tastatur (110) umfassend eine Vielzahl von Mehrzweck- Tasten und Tasten für nichtnumerische Zwecke, wobei die Mehrzweck- Taste unterschiedliche Eingabedefinitionen in einem Buchstaben-Modus und einem Zahl- Modus haben, und die Taste für nicht- numerische Zwecke ohne universelle numerische Eingabe- Definition, und ein Adressbuch (120), umfassend eine Vielzahl von Adresseinträgen und die Vorrichtung ist **gekennzeichnet durch**:
eine Verarbeitungseinheit (130) zum Empfangen von Tastenanschlägen, die mindestens einen ersten Anschlag und einen zweiten Anschlag umfassen, wenn der erste oder der zweite Tastenanschlag einer der Taste für nichtnumerische Zwecke entspricht, Akzeptieren nur der Eingabe- Definition im Buchstaben- Modus und Erzeugen einer Buchstaben- Eingabe- Definition der Eingangssequenz im Buchstaben- Modus, und um wenigstens eines Adresseintrages entsprechend der Buchstaben- Eingabe-Definition der Eingangssequenz im Buchstaben- Modus aus dem Adressbuch zu erlangen, der entsprechend zum Anwählen dient.

9. Die Vorrichtung nach Anspruch 8, wobei die Verarbeitungseinheit (130) ferner angepasst ist, um zumindest einen Adresseintrag entsprechend der Buchstaben- Eingabe- Definition und einer numerischen Eingabe- Definition der Eingangssequenz in den Buchstaben- und Zahlenkombinations- Modi aus dem Adressbuch zum entsprechenden Wählen abzufragen, wenn die Tastenanschläge den Mehrzweck- Tasten entsprechen.

10. Die Vorrichtung nach Anspruch 9, wobei die Verarbeitungseinheit (130) ferner angepasst ist um zu wählen unter Verwendung der numerischen Eingabe-Definition der Eingangssequenz in dem Nummern- Modus.

11. Die Vorrichtung nach Anspruch 8, wobei die Verarbeitungseinheit (130) weiterhin geeignet ist zum Bestimmen, ob der Adresseintrag der Buchstaben- Eingabe-Definition entspricht, indem geprüft wird, ob die Buchstaben- Eingabe- Definition am Anfang existiert, oder an irgendeiner Position in mindestens einem Buchstaben Datenfeld des Adresseintrages.

12. Die Vorrichtung nach Anspruch 9, wobei die Verarbeitungseinheit (130) weiterhin geeignet ist um zu bestimmen, ob der Adresseintrag der numerischen Eingabe-Definition entspricht, indem geprüft wird, ob die numerische Eingabe- Definition am Anfang mindestens eines numerischen Datenfeldes des Adresseintrages existiert.

13. Die Vorrichtung nach Anspruch 8, wobei die Verarbeitungseinheit (130) ferner angepasst ist, um eine Auswahl der abgerufenen Adresseinträge zu empfangen und wenigstens eine Telefonnummer entsprechend des ausgewählten Adresseintrages zu wählen.

14. Die Vorrichtung nach Anspruch 8, ferner umfassend ein Anzeige- Modul (140) zum Anzeigen des abgerufenen Adresseintrages.

15. Maschinenlesbares Speichermedium, umfassend ein Computerprogramm, welches, wenn es ausgeführt wird, bewirkt, dass eine Vorrichtung alle Schritte des Verfahrens nach einem der Ansprüche 1-7 ausführt.

## Revendications

1. Procédé de numérotation pour un dispositif ayant un clavier (110), le clavier (110) comprenant plusieurs touches à double finalités et des touches non numériques, les touches à double finalités ayant des définitions d'entrée distinctes suivant un mode alphabétique et suivant un mode numérique, et les touches non numériques étant dénuées de définition d'entrée numériques, le procédé comportant :
- la réception d'une frappe comprenant au moins une première et une seconde frappe, et générant une séquence d'entrée correspondante; et
le procédé étant **caractérisé par** la validation seule de la définition d'entrée suivant un mode alphabétique si la première frappe ou la seconde frappe correspond à l'une des touches non numériques, et la génération d'une définition d'entrée alphabétique de la séquence d'entrée en mode alphabétique, et la recherche au sein d'un carnet d'adresse en vue d'une numérotation d'au moins un enregistrement d'adresse correspondant à la définition d'entrée alphabétique de la séquence d'entrée suivant le mode alphabétique.

2. Le procédé de la revendication 1 comprenant en outre l'étape suivant laquelle lorsque les frappes de touche correspondent aux touches à double destination, la recherche au sein du carnet d'adresse en vue d'une numérotation d'au moins un enregistrement d'adresse correspondant à la définition d'entrée alphabétique et la définition d'entrée numérique de la séquence d'entrée suivant les modes alphabétique et numérique.

3. Le procédé selon la revendication 2 comprenant en outre la numérotation à partir de l'utilisation de la définition d'entrée numérique de la séquence d'entrée suivant un mode numérique.

4. Le procédé de la revendication 1 comprenant en outre la détermination suivant laquelle l'enregistrement d'adresse correspond à la définition d'entrée alphabétique au moyen d'une vérification que la définition d'entrée alphabétique existe au début ou en toute position d'au moins un champ de donnée alphabétique de l'enregistrement d'adresse.

5. Le procédé de la revendication 2 comprenant en outre la détermination suivant laquelle l'enregistrement d'adresse correspond à la définition d'entrée numérique au moyen d'une vérification que la définition d'entrée numérique existe au début d'au moins un champ de donnée numérique de l'enregistrement d'adresse.

6. Le procédé de la revendication 1 comprenant en outre la réception d'une sélection de l'enregistrement d'adresse récupéré, et la numérotation suivant au moins une numéro de téléphone correspondant à l'enregistrement d'adresses sélectionné.

7. Le procédé de la revendication 1 comprenant en outre l'affichage de l'enregistrement d'adresse retrouvé.

8. Un dispositif, comprenant un clavier (110), comprenant plusieurs touches à double finalités et des touches non numériques, les touches à double finalités ayant des définitions d'entrée distinctes suivant un mode alphabétique et suivant un mode numérique, et les touches non numériques étant dénuées de définition d'entrée numériques, ainsi qu'un carnet d'adresses (120) comprenant plusieurs enregistrements d'adresse, et le dispositif étant **caractérisé en ce qu'**il comporte:
- une unité de traitement (130) pour la réception d'une frappe comprenant au moins une première et une seconde frappe, et la validation seule de la définition d'entrée suivant un mode alphabétique lorsque la première frappe ou la seconde frappe correspond à l'une des touches non numérique, et la génération d'une définition d'entrée alphabétique de la séquence d'entrée en mode alphabétique, en vue de la seule recherche au sein d'un carnet d'adresse pour une numérotation d'au moins un enregistrement d'adresse correspondant à la définition d'entrée alphabétique de la séquence d'entrée en mode alphabétique.

9. Le dispositif de la revendication 8 dans lequel l'unité de traitement (130) est en outre adaptée à la recherche au sein du carnet d'adresse en vue d'une numérotation d'au moins un enregistrement d'adresse correspondant à la définition d'entrée alphabétique et à la définition d'entrée numérique de la séquence d'entrée suivant les modes alphabétique et numérique lorsque les frappes correspondent aux touches à double finalités.

10. Le dispositif de la revendication 9 dans lequel l'unité de traitement (130) est en outre adaptée à la numérotation au moyen de la définition d'entrée numérique de la séquence d'entrée suivant le mode numérique.

11. Le dispositif de la revendication 8 dans lequel l'unité de traitement (130) est en outre adaptée à la détermination que l'enregistrement d'adresse correspond à la définition d'entrée alphabétique au moyen d'une vérification que la définition d'entrée alphabétiques existe au début ou à toute position d'au moins un champ de données de l'enregistrement d'adresse.

12. Le dispositif de la revendication 9 dans lequel l'unité de traitement (130) est en outre adaptée à la détermination que l'enregistrement d'adresse correspond à la définition d'entrée numérique au moyen d'une vérification que la définition d'entrée numérique existe au début d'au moins un champ de données numériques de l'enregistrement d'adresse.

13. Le dispositif de la revendication 8 dans lequel l'unité de traitement (130) est en outre adaptée à la recherche d'une sélection d'enregistrement d'adresses récupérées, et à la numérotation suivant au moins un numéro téléphonique correspondant à l'enregistrement d'adresse sélectionné.

14. Le dispositif de la revendication 8, comprenant en outre un module d'affichage (140) pour l'affichage de l'enregistrement d'adresses récupéré.

15. Un support de stockage lisible par une machine comprenant un programme d'ordinateur, lequel, lors de son exécution, conduit un dispositif à la réalisation de toutes les étapes des méthodes revendiqués dans l'une quelconque des revendications 1 à 7.
